# EUROPEAN PATENT APPLICATION

(11) **EP 0 813 991 A1**
(43) Date of publication of application: **29.12.1997**
(21) Application number: 96930177.9
(22) Date of filing: 16.09.1996
(51) Int. Cl.: B60N 2/24

(54) **SEAT FOR PUBLIC TRANSPORT VEHICLES**

(30) Priority: 18.09.1995 ES 9502451 U
(71) Applicant: FABRICACION ASIENTOS VEHICULOS INDUSTRIALES, S.A. (FAINSA), 08100 Martorelles (ES)
(72) Inventor: SINGLA CASASAYAS, Juan, E-08100 Martorelles (ES)
(74) Representative: Ponti Sales, Adelaida
(86) International application number: ES9600173
(87) International publication number: WO9710968

(57) **Abstract**

The seat is comprised of a carrier structure (2) consisting of metal bars (2a, 2b, 2c) and a plastic material body (1) which forms the back element and the seating element itself, and which is mounted on said carrier structure (2); the plastic material body (1) is comprised of a single injected part wherein the zone (1b) which forms the back is comprised of a central single-wall sheet (4) and of two hollow side uprights (5). And elongate internal cavity is defined in each of the two side uprights, said cavity being open at the bottom and adjusted to the metal bars (2b) of the carrier structure (2) and wherein said zone (1b) which forms the back has at the top at least one handle (8) of which the rear part is comprised of a plurality of ribs (10) paralell to each other and forming a gripping surface.

## Description

The present invention relates to a seat for public transport vehicles, such as busses and the like, of the type which includes a carrier structure consisting of metal bars and a body of plastic material which forms the backrest and the seat as such and which is mounted on said carrier structure.

### BACKGROUND OF THE INVENTION

Known in the art are different seats for public transport vehicles of the type described; in such seats, some cavities are formed in the body of plastic material for insertion of the bars of the carrier structure.

In some simple seats the bars are left exposed at the rear part of the seat, but in most cases this solution is not acceptable due to the unattractive appearance of the resulting unit, to the existence of grooves and hollows which become filled with dirt and call for periodic maintenance, and also to the poor protection which this design affords against acts of vandalism.

In other cases, in order to conceal the bars of the structure recourse is had to one or more supplementary parts which constitute covers fixed in various ways to the rear part of the unit; this solution improves the appearance of the seat, but it makes its manufacture and assembly more complicated, thereby increasing the cost of the product, while it also has the disadvantage of presenting a number of joints between the two or more parts of the seat body, together with visible bolt heads or rivets, which on the one hand are a source of dirt and on the other are not very resistant to aggression.

Moreover, it is advisable for the seats of public transport vehicles to have handles at the top of the seat backrests so that passengers can hold onto them as they sit down or when they are standing in the aisle of the bus.

These handles are usually incorporated onto the finished seat as supplementary pieces, which makes fitting more complicated and lends them a poor appearance, while at the same time being unergonomic because the handles project from the seat and take up some space in the aisle.

Where handles have been incorporated into the profile of the backrest it has proved necessary to provide a large number of pieces for assembly, with the consequent increased cost of materials and labour, since the usual shape of the handles makes it impossible to mould them in a single piece with the backrest.

### DESCRIPTION OF THE INVENTION

The object of the present invention is to provide a seat which does not have the above-mentioned drawbacks, and in particular a seat which has a minimum number of parts and does not require complex assembly operations, so that costs are reduced, while the seat is at the same time comfortable and of pleasant appearance.

Another object of the invention is to provide a seat which is of solid construction and hinders any possible act of vandalism.

In accordance with these objects, the seat of the present invention for public transport vehicles is characterized in that the body of plastic material constitutes a single injected part, wherein the region which defines the backrest is formed by a central single-wall sheet and by two hollow side uprights, an elongated inner cavity being formed in each of the two side uprights, the cavity being open at the bottom and fitting around the metal bars of the carrier structure, and wherein said region which defines the backrest has at the top at least one handle whose rear part comprises a plurality of ribs parallel to each other and with their free ends forming a gripping surface.

This particular configuration of the seat body makes it extremely easy to manufacture and assemble, since it requires no assembly operation other than insertion and securing of the bars of the carrier structure; this means that the cost of the seat can be kept very low, though without thereby renouncing an aesthetically pleasing design and considerable strength. All this makes it particularly suitable for application on vehicles in developing countries, where keeping costs affordable is a major requirement.

The finished seat, moreover, has no parts which lend themselves to vandalism or the accumulation of dirt, so that there are practically no maintenance costs and the durability of the seat is ensured.

The configuration of the part which makes up the entire body of plastic material allows it to be moulded in a single piece, which provides most of the advantages mentioned.

The handle or handles provided on the top part of the backrest are formed on one side by the aforesaid ribs, which permits the finished piece to be removed from the mould while at the same time providing an ergonomic gripping handle for passengers, who perceive a surface which feels practically rounded.

In a preferred embodiment of the seat of the invention, said injected piece which forms the body has two handles, one on either side of the backrest, with the rear part of the upper portion of the backrest between the two handles being formed of a plurality of ribs parallel to each other.

The handles remain incorporated into the profile of the backrest of the seat and do not hinder the movement of passengers along the aisle, while further avoiding the need to fit additional parts for the purpose.

The aforesaid parallel ribs of the upper portion of the backrest and of the handles can be horizontal; in one alternative, these ribs can also be vertical.

Advantageously, the aforesaid injected piece which forms the body has on either side, along the lower part of the seat as such, a plurality of vertical ribs running parallel to each other.

Preferably, at least a region of the surface of the injected piece which constitutes the body has a number of raised portions, having a thickness of a few tenths of a millimetre.

These raised portions, in addition to offering the possibility of decorating the seat with patterns without any need for finishing operations, prevent passengers from sliding and facilitate transpiration.

Moreover, a covering fabric can be fitted on at least some regions of the part which forms the seat body.

This covering can be padded for greater comfort.

In this case, despite a slight increase of cost, the comfort and appearance of the seat are enhanced still further, which can be advisable in some applications. The fabrics or cushioned sections applied can be fixed with suitable means in the region of the side uprights of the backrest, in such a way that the fixing means are totally concealed from sight.

### BRIEF DESCRIPTION OF THE DRAWINGS

There follows below a description of a mode of embodiment of the seat of the invention, by way of non-restrictive example, with reference to the attached drawings, in which:
Figure 1 is a perspective view of the seat of the invention;
Figures 2 and 3 are side and elevation views, respectively, of the seat of Figure 1;
Figure 4 is a perspective view of the carrier structure of the seat;
Figures 5a and 5b are elevation views from the rear of the top portion of the backrest, according to two embodiments of the invention;
Figures 6 and 7 are section views along lines VI-VI and VII-VII, respectively, of Figure 3; and
Figure 8 is a section view on a central vertical plane of the upper portion of the seat of the previous figures.

### DESCRIPTION OF PREFERRED EMBODIMENTS

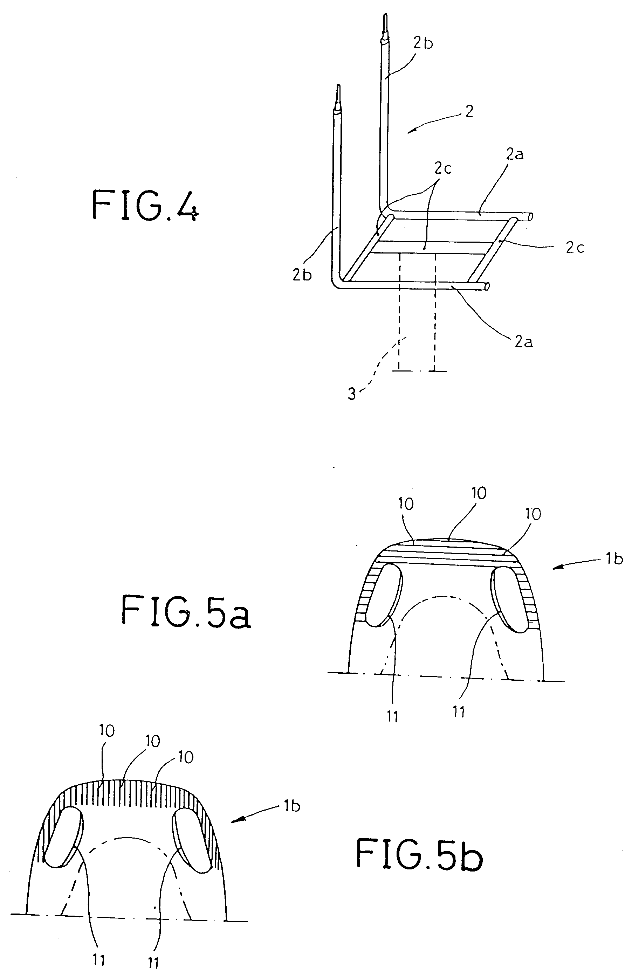

As shown in the figures, the seat is constituted by a body 1 of plastic material and a carrier structure 2 (Figure 4), the latter intended to be fixed to a support 3 mounted on the chassis of the vehicle.

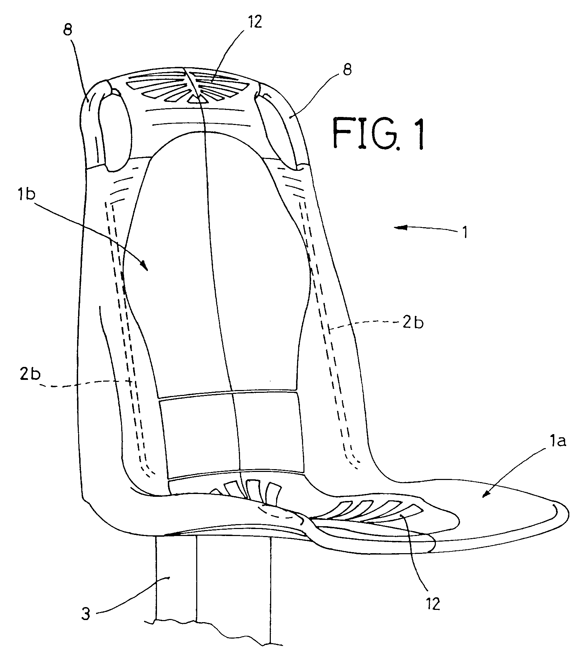

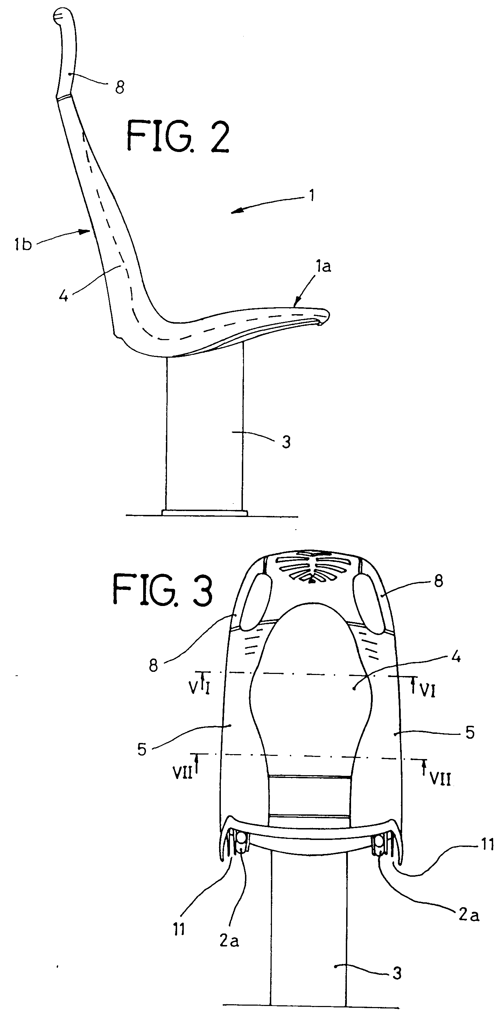

The carrier structure 2 normally comprises a set of metal bars 2a,2b,2c attached to each other. The broken lines of Figure 1 represent the bars which are concealed inside the backrest of the seat, while Figure 3 shows the bars 2a fitted beneath the seat. The structure also includes bars 2c to link the previous ones and to secure the structure to the support 3.

These bars make the seat rigid and lend it mechanical strength, while at the same time ensuring a certain amount of flexibility.

The body 1 of plastic material, for example of polypropylene, is according to the invention constituted by a single piece.

A body of this type is manufactured by injection in a mould, as is usual in the art, and there is always a considerable difficulty in achieving complex pieces with configurations which allow their removal from the mould after forming.

In this case the single-piece body has a portion 1a which constitutes the seat as such and a portion 1b which forms the backrest (Figure 1).

The portion 1a of the seat is formed entirely of a single-wall sheet with pronounced concavity at the centre and rising towards the sides, the bars 2a of the carrier structure 2 being fitted beneath the side zones.

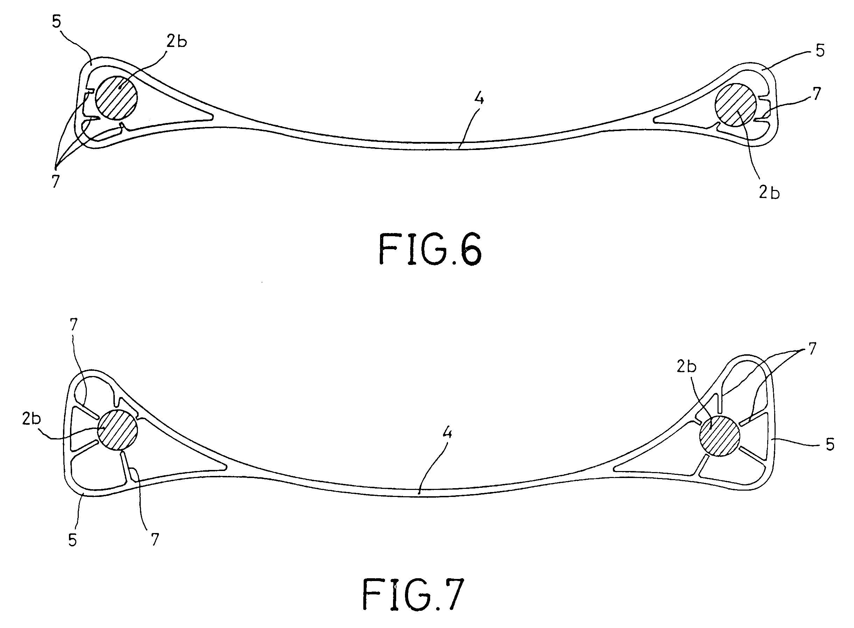

As can be seen in Figure 3 and the sections of Figures 6 and 7, the backrest portion 1b consists of a central single-wall sheet 4 and two hollow side uprights 5, which form cavities for receiving the bars 2b of the carrier structure 2. Inside the uprights 5, over the greater part of their height, are formed some lugs 7 which match the size of the bars 2b.

The side uprights 5 are open at their bottom part to allow insertion of the bars 2b and thereby assembly of the finished seat.

The broken line of Figure 2 shows the line of the central sheet 4 of the backrest and the seat.

At the upper part of the backrest are defined some handles 8, which are included in the profile of the backrest without projecting from it.

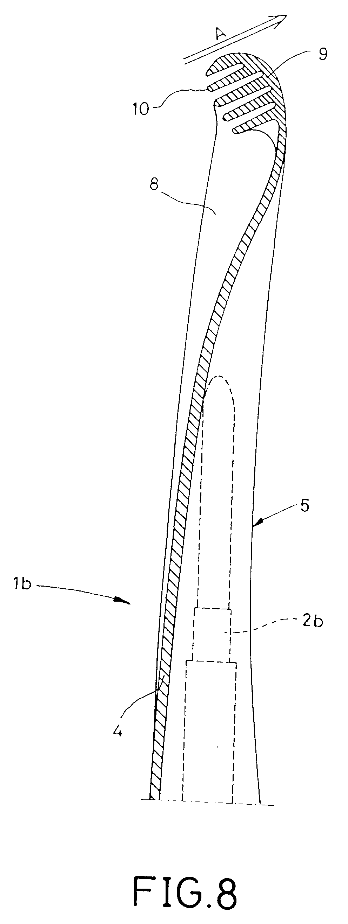

Figure 8 shows in detail the upper portion of the backrest 1b, with a bar 2b inserted into the side upright 5. The figure is a section view along a vertical plane through the centre of the backrest, and shows the configuration of the upper region 9 between the handles 8; as can be seen, the rear part of this region 9 has a number of ribs 10 running parallel to each other, the free ends of which form a substantially smooth and slightly curved surface which provides a very comfortable and pleasant handle.

The ribs of region 9 extend into the upper part of the handles 8, so that the entire upper portion of the backrest is configured in a similar way.

This allows extraction of the finished piece from the mould, in the direction shown by arrow A in Figure 8.

In Figure 8 the ribs 10 run horizontally, but they could also run vertically, thereby providing the same benefits in terms of a rounded gripping surface and possibility of extracting the piece from the mould.

In this respect Figure 5a is a rear elevation view of a backrest with the ribs 10 running horizontally, which would pertain to the seat of Figure 8, while Figure 5b shows a view, similar to that of Figure 5a, of a backrest with the ribs 10 running vertically. The choice between these two arrangements will depend on the aesthetic and practical requirements of each case, but does not effect the essential nature of the invention.

The region of the outline of the handles which has no ribs (towards the centre of the backrest), which corresponds to a region of the piece having a single wall, is rounded and made to project slightly towards the rear part of the seat This outline is marked with reference number 11 in Figures 5a, 5b.

The bottom portion of the seat also has some parallel ribs 11, as shown in Figure 3.

As can be seen in the figures, the seat as a whole also has smooth lines and surfaces, without sharp edges or aggressive projections.

In the preferred embodiment shown, some regions of the seat are further provided with raised o rough portions 12 (Figure 1), in order to prevent passengers from sliding and to facilitate transpiration.

Despite one particular embodiment of the seat of the invention having been described and shown, it is clear that modifications and variants could be introduced which would not affect its essential nature or depart from the sphere of protection of the attached claims.

For example, the height of the backrest and of the region provided with handles could be greater or less as required; similarly, two handles may be fitted, as in the example shown, or a single handle taking up the entire upper part of the backrest, with a rib configuration similar to that described.

## Claims

1. Seat for public transport vehicles, such as busses and the like, of the type which includes a carrier structure (2) of metal bars (2a,2b,2c) and a body (1) of plastic material which forms the backrest and seat as such and is mounted on the aforesaid carrier structure (2), characterized in that the body (1) of plastic material constitutes a single injected part, wherein the region (1b) which constitutes the backrest is formed by a central single-wall sheet (4) and by two hollow side uprights (5), an elongated inner cavity being formed in each of the two side uprights, the cavity being open at the bottom and fitting around the metal bars (2b) of the carrier structure (2), and wherein said region (1b) which defines the backrest has at the top at least one handle (6) whose rear part comprises a plurality of ribs (10) parallel to each other and with their free ends forming a gripping surface.

2. Seat as claimed in Claim 1, characterized in that said injected piece which forms the body (1) has two handles (8), one on either side of the backrest, with the rear part of the upper portion (9) of the backrest between the two handles being formed of a plurality of ribs (10) parallel to each other.

3. Seat as claimed in either of Claims 1 or 2, characterized in that said parallel ribs (10) are horizontal.

4. Seat as claimed in either of Claims 1 or 2, characterized in that said parallel ribs (10) are vertical.

5. Seat as claimed in any of the above claims, characterized in that the aforesaid injected piece which forms the body (1) has on either side, along the lower part of the seat as such, a plurality of vertical ribs (11) running parallel to each other.

6. Seat as claimed in any of the above claims, characterized in that at least a region of the surface of the injected piece which constitutes the body (1) has a number of raised portions (12) having a thickness of a few tenths of a millimetre.

7. Seat as claimed in any of the above claims, characterized in that a covering is fitted on at least some regions of the part which forms the seat body (1).

8. Seat as claimed in Claim 8, characterized in that said covering is padded.
